# FASCICULE DE BREVET EUROPEEN

(11) **EP 4 024 341 B1**
(45) Date de publication et mention de la délivrance du brevet: **12.02.2025**
(21) Numéro de dépôt: 21218337.0
(22) Date de dépôt: 30.12.2021
(51) Int. Cl.: G06T 11/20

(54) **PROCÉDÉ DE VISUALISATION D'UN GRAPHE DYNAMIQUE, PRODUIT PROGRAMME D'ORDINATEUR ET SYSTÈME ASSOCIÉS**
VERFAHREN ZUR ANZEIGE EINES DYNAMISCHEN GRAPHEN, ENTSPRECHENDES COMPUTERPROGRAMMPRODUKT UND SYSTEM
METHOD FOR DISPLAYING A DYNAMIC GRAPH, ASSOCIATED COMPUTER PROGRAM PRODUCT AND SYSTEM

(30) Priorité: 30.12.2020 FR 2014245
(43) Date de publication de la demande: 06.07.2022
(73) Titulaire: THALES, 92400 Courbevoie (FR)
(72) Inventeur: MINELLA, Linda, 91767 PALAISEAU CEDEX (FR); RANNOU, Léo, 91767 PALAISEAU CEDEX (FR)
(74) Mandataire: Lavoix

(56) Documents cités:
- RANNOU LÉO: "Temporal Connectivity and Path Computation for Stream Graph - PhD Thesis", 9 November 2020 (2020-11-09), XP055839000, Retrieved from the Internet <URL:https://www.complexnetworks.fr/wp-content/uploads/2011/01/Manuscrit_These_Leo_Rannou.pdf> [retrieved on 20210908]
- LATAPY MATTHIEU ET AL: "Stream graphs and link streams for the modeling of interactions over time", vol. 8, 11 October 2017 (2017-10-11), XP055839050, Retrieved from the Internet <URL:https://arxiv.org/abs/1710.04073>

## Description

La présente invention concerne un procédé de visualisation d'un graphe dynamique.

La présente invention concerne également un produit programme d'ordinateur et un système de visualisation associés.

De manière connue en soi, un graphe est une structure composée d'objets dans laquelle certaines paires d'objets sont en relation. Les objets sont représentés par des nœuds, et les relations entre eux par des liens entre ces nœuds.

Dans le domaine de l'analyse des données, des analystes sont amenés à étudier toute sorte de graphe. Il arrive notamment que les interactions entre les nœuds soient amenées à évoluer avec un paramètre évolutif tel que le temps. Le graphe est alors qualifié de dynamique.

Dès lors, lorsque le nombre de nœuds considéré est élevé, le travail d'analyse est très fastidieux pour l'analyste qui doit alors travailler sur un grand nombre de graphes, possédant chacun un très grand nombre de données.

Différentes méthodes de visualisation de graphes dynamiques existent dans l'état de la technique.

Par exemple, on connait des solutions de type « animation » et de type « axe de temps ».

Les solutions de type « animation » présentent, sous forme d'images successives, les graphes à des instants différents. Ils présentent néanmoins l'inconvénient de ne pas offrir de vue d'ensemble de l'évolution des données. En outre, la visualisation des graphes avec ce type de méthode impose un effort de mémorisation à l'analyste, et rend difficile l'interprétation de la trajectoire des nœuds.

Les solutions de type « axe de temps » présentent un axe de temps en face duquel sont portés les différents graphes obtenus pour des instants successifs. Toutefois, les inconvénients de telles méthodes sont la perte d'information liée à l'échantillonnage du temps, tout comme la difficulté d'observer facilement l'évolution des liens dans le temps. Enfin, la visualisation devient très difficile lorsque le nombre de nœuds augmente.

On connait par ailleurs des méthodes de visualisation divulguées dans Rannou Léo : « Temporal Connectivity and Path Computation for Stream Graph - PhD Thesis » et Latapy Matthieu et al : « Stream graphs and link streams for the modeling of interactions over time ».

La présente invention a pour but de remédier à ces inconvénients en fournissant un procédé permettant de représenter visuellement à la fois l'évolution des interactions entre les nœuds d'un graphe dynamique mais aussi les propriétés dynamiques de celui-ci, et ce de manière lisible. Enfin, la méthode de visualisation doit rester lisible lorsque le nombre de nœud augmente.

A cet effet, l'invention a pour objet un procédé de visualisation conforme à la revendication 1.

Suivant d'autres aspects avantageux de l'invention, le procédé comprend l'une ou plusieurs des caractéristiques des revendications 2 à 10.

L'invention a également pour objet un produit programme d'ordinateur comportant des instructions logicielles qui, lorsque mises en œuvre par un équipement informatique, mettent en œuvre le procédé tel que défini précédemment.

L'invention a également pour objet un système de visualisation d'un graphe dynamique, comprenant des moyens techniques adaptés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de visualisation selon l'invention ;
- la figure 2 est un organigramme d'un procédé de visualisation selon l'invention, le procédé étant mis en œuvre par le système de la figure 1 ; et
- la figure 3 est une vue schématique illustrant la mise en œuvre du procédé de la figure 2.

Le système de visualisation 10 permet de visualiser un graphe dynamique.

Dans le texte qui suit, par graphe dynamique, on entend un graphe dont les composantes évoluent en fonction d'un paramètre évolutif. En particulier, à chaque valeur du paramètre évolutif, un graphe élémentaire est associé.

Par graphe élémentaire, on entend une structure composée d'un ou de plusieurs nœuds et dans le cas de plusieurs nœuds, d'au moins un lien raccordant une paire de nœuds.

Un exemple de paramètre évolutif est le temps.

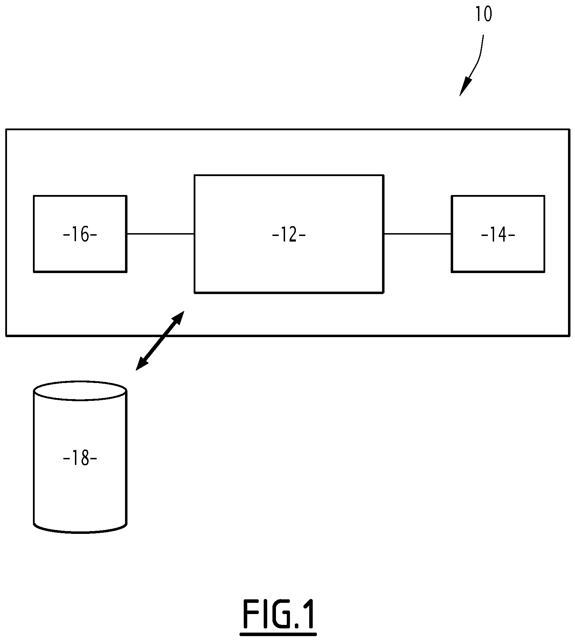

En référence à la figure 1, le système de visualisation 10 comprend un module de traitement 12 et un écran d'affichage 14. Il comprend en outre des moyens d'interaction 16, avec un utilisateur par exemple, et une base de données 18.

La base de données 18 contient des données permettant de définir un graphe dynamique. En particulier, ces données permettent de définir un ensemble de nœuds et un ensemble de liens pour former une pluralité de graphes élémentaires évoluant en fonction d'un paramètre évolutif.

Selon différents exemples de réalisation, chaque nœud peut représenter un objet tangible ou virtuel et/ou un individu. Chaque lien représente alors une relation qui peut exister entre ces objets et/ou ces individus.

Selon un exemple de réalisation, les nœuds présentent un ensemble d'ordinateurs dans un réseau informatique. Dans ce cas, un lien entre deux nœuds peut correspondre par exemple à une connexion établie entre les ordinateurs correspondants à un instant donné.

Le module de traitement 12 est configuré pour traiter les données contenues dans la base de données 18 comme cela sera expliqué par la suite, afin de visualiser un graphe dynamique de manière lisible sur l'écran d'affichage 14.

Le module de traitement 12 se présente par exemple au moins partiellement sous la forme d'un logiciel qui est exécuté par un processeur adapté et est stocké dans une mémoire adaptée.

En variante ou en complément, le module de traitement 12 se présente au moins partiellement sous la forme d'un dispositif physique, comme par exemple un circuit logique programmable de type FPGA (« *Field Programmable Gate Arrays* » en anglais).

L'écran d'affichage 14 est raccordé au module de traitement 12 et est apte à afficher les informations issues de ce module.

Les moyens d'interaction 16 permettent à un utilisateur d'interagir avec le module de traitement. Il s'agit par exemple d'une souris ou encore d'un clavier.

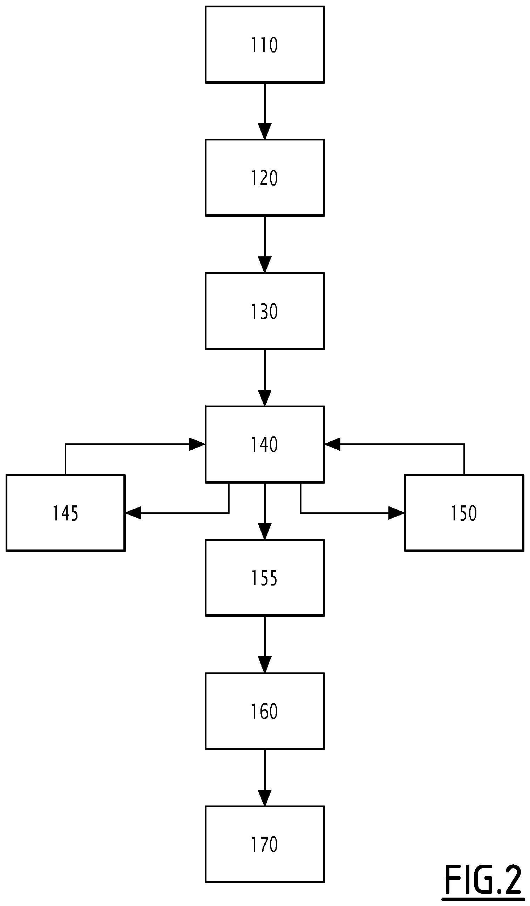

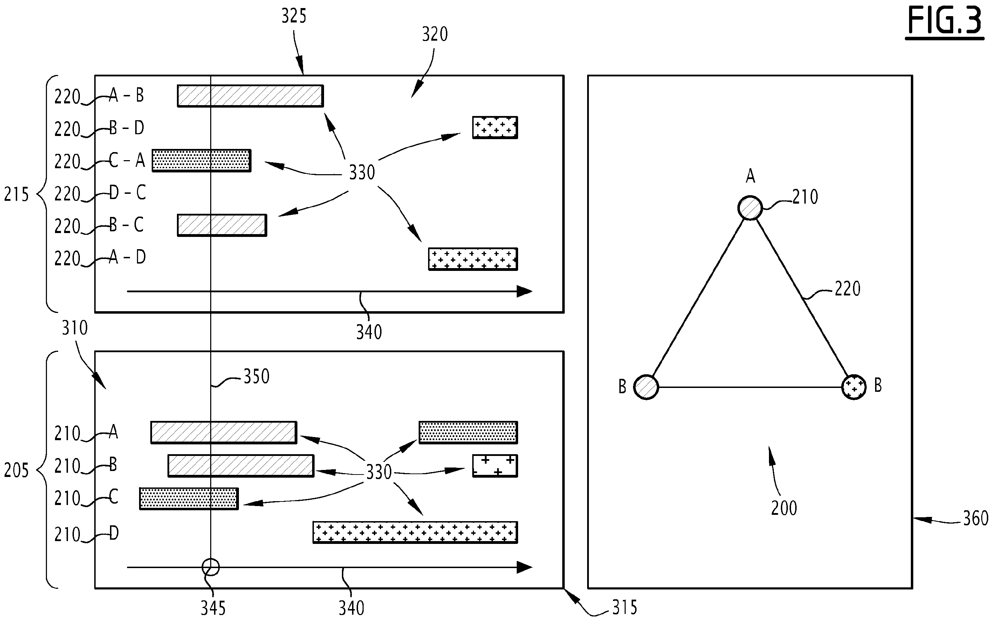

Le procédé de visualisation mis en œuvre par le système de visualisation 10 sera désormais expliqué en référence à la figure 2 présentant un organigramme de ses étapes et en référence à la figure 3 présentant un exemple d'affichage d'un graphe dynamique à l'issue du procédé.

Lors de l'étape d'initialisation 110 du procédé de visualisation, le module de traitement 12 acquiert les données contenues dans la base de données 18.

Ces données permettent la définition d'un graphe dynamique. Comme expliqué ci-dessus, ces données peuvent donc être un ensemble 205 de nœuds 210, et un ensemble 215 de liens 220. Dès lors, il suffit de définir chaque graphe élémentaire 200 composant le graphe dynamique par les nœuds 210 et les liens 220 qu'il contient effectivement parmi les ensembles 205 et 215.

Par la suite, les étapes 120 à 170 sont des étapes de traitement de ces données en vue de la visualisation du graphe dynamique.

Lors de l'étape 120, le module de traitement 12 détermine un premier graphique 310.

Pour ce faire, à partir des données analysées contenues dans la base de données 18, le module de traitement 12 assigne une valeur binaire à chaque nœud 210 de l'ensemble 205 et cela pour chaque valeur du paramètre évolutif.

Cette valeur binaire est vrai lorsque le nœud 210 associé est présent dans le graphe correspondant à la valeur du paramètre évolutif associé à cette valeur binaire. Dans le cas où le nœud 210 n'est pas présent dans le graphe correspondant à la valeur du paramètre évolutif, cette valeur binaire est faux.

Le premier graphique 310 est alors le graphique de cette valeur binaire en fonction du paramètre évolutif.

De la même manière, lors de l'étape 130, le module de traitement 12 détermine un deuxième graphique 320.

Pour ce faire, à partir des données analysées contenues dans la base de données 18, le module de traitement 12 assigne une valeur binaire à chaque lien 220 de l'ensemble 215 et cela pour chaque valeur du paramètre évolutif.

Cette valeur binaire est vrai lorsque le lien 220 associé est présent dans le graphe correspondant à la valeur du paramètre évolutif associé à cette valeur binaire. Dans le cas où le lien 220 n'est pas présent dans le graphe correspondant à la valeur du paramètre évolutif, cette valeur binaire est faux.

Le deuxième graphique 320 est alors le graphique de cette nouvelle valeur binaire en fonction du paramètre évolutif.

Lors de l'étape 140, le premier graphique 310 est affiché dans une première zone d'affichage 315 de l'écran d'affichage 14 et le second graphique 320 est affiché dans une seconde zone d'affichage 325 de l'écran d'affichage 14.

Comme représenté sur la figure 3, l'affichage du premier graphique 310 et du deuxième graphique 320 se fait avec des lignes 330 de représentation de valeurs binaires associées respectivement aux nœuds 210 et aux liens 220.

Ces lignes 330 de représentation sont continues sur des segments sur lesquels les valeurs binaires correspondantes restent vrai.

Lorsque les valeurs binaires associées à une ligne 330 de représentation des valeurs binaires d'un nœud 210 ou d'un lien 220 restent faux sur des segments, elle présente une discontinuité sur ces segments.

De plus, les lignes 330 de représentation des valeurs binaires associées aux nœuds 210 et aux liens 220 peuvent présenter un code visuel en fonction d'attributs associés respectivement à ces nœuds 210 et à ces liens 220.

L'attribut d'un nœud 210 est par exemple le nombre de liens 220 qu'il possède. Ainsi, un code visuel peut représenter d'une première manière les lignes 330 associées aux nœuds 210 possédant 3 nœuds, et d'une manière différente les lignes 330 associées aux nœuds 210 possédant 2 nœuds.

Selon un exemple de réalisation dans lequel les nœuds 210 représentent des ordinateurs dans un réseau informatique, l'attribut d'un nœud peut être par exemple le type d'ordinateur ou bien le niveau de confidentialité associé à cet ordinateur. Dans ce même exemple de réalisation, l'attribut d'un lien peut être le type de connexion établie entre deux ordinateurs à un instant donné ou encore sa durée. Comme représenté sur la figure 3, ce code visuel peut être des hachures, des pointillés, mais aussi des couleurs différentes par exemple.

Le procédé peut comprendre en outre les étapes 145 et 150 décrites ci-dessous, à la suite de l'étape 140.

L'étape 145 est une étape de filtrage des nœuds 210 et/ou des liens 220 selon un critère spécifique. Lors de cette étape 150, un utilisateur sélectionne au moins un critère d'affichage prédéterminé. Il choisit alors d'afficher une partie seulement de l'ensemble 205 des nœuds 210 et/ou de l'ensemble 215 des nœuds 220.

A la suite de l'étape 145, l'étape 140 d'affichage est répétée et comprend alors l'affichage des zones satisfaisant à ce ou ces critères sur le premier graphique 310 et le deuxième graphique 320.

Lors de cette étape 145, le ou chaque critère est défini sur la base d'une valeur particulière ou d'un ensemble de valeurs particulières d'un ou de plusieurs attributs des nœuds 210 et/ou des liens 220.

L'attribut d'un nœud 210 est par exemple le nombre de liens 220 qu'il possède. Ainsi, lors de l'étape 145, l'utilisateur pourra choisir d'afficher dans la première zone 315 d'affichage, seulement les nœuds 210 ayant plus de 3 liens, pour une valeur choisie du paramètre évolutif.

L'étape 150 est une étape de tri des nœuds 210 et/ou des liens 220 selon un critère spécifique. Lors de cette étape 150, un utilisateur choisit au moins un critère de tri des nœuds 210 et/ou des liens 220.

A l'issue de cette étape 150, l'étape 140 est répétée et comprend alors l'affichage des représentations des valeurs binaires correspondantes selon l'ordre déterminé par ce critère de tri.

L'attribut d'un nœud 210 est par exemple le nombre de liens 220 qu'il possède. Ainsi, lors de l'étape 150, l'utilisateur pourra choisir d'afficher dans la première zone 315 d'affichage, les nœuds 210 dans un ordre correspondant à l'ordre du nombre de liens 220 qu'ils possèdent.

L'étape 155 est une étape d'affichage, dans la première zone 315 et/ou dans la deuxième zone 325, d'un axe évolutif 340 présentant l'ensemble ou au moins une partie des valeurs du paramètre évolutif. Chacun du premier graphique 310 et du deuxième graphique 320 sont alors affichés en correspondance avec cet axe évolutif 340.

Par ailleurs, comme représenté sur la figure 3, la première zone 315 d'affichage et la deuxième zone 325 d'affichage sont disposées l'une en regard de l'autre de sorte que les valeurs binaires correspondant à une même valeur du paramètre évolutif soient représentées sur une même ligne perpendiculaire à l'axe évolutif 340.

Dans l'exemple de la figure 3, l'axe évolutif 340 est un axe horizontal. Dans ce cas, la première zone 315 est disposée par exemple au-dessous de la deuxième zone 325.

Le procédé comprend également l'étape 160 d'acquisition.

Lors de cette étape 160, l'acquisition d'une commande est mise en œuvre. Cette commande est générée à la suite d'une interaction d'un utilisateur exercée sur la première zone 315 d'affichage et/ou la deuxième zone 325 d'affichage.

L'interaction de l'utilisateur comprend par exemple la sélection d'une valeur 345 du paramètre évolutif en relation avec l'axe évolutif 340. La commande indique alors la valeur 345 particulière du paramètre évolutif sélectionnée par l'utilisateur.

Comme représenté sur la figure 3, cette commande est par exemple faite par l'utilisateur en déplaçant une ligne 350 perpendiculaire à l'axe évolutif 340 et interceptant cet axe évolutif 340 dans le point correspondant à la valeur 345 du paramètre évolutif sélectionné.

Par ailleurs, cette ligne 350 s'étend de préférence à travers la première zone 315 d'affichage et la deuxième zone 325 d'affichage. Dans l'exemple de la figure 3, la ligne 350 est alors une ligne verticale.

Le procédé comprend enfin une étape finale 170 d'affichage du graphe élémentaire 200 correspondant à la valeur 345 sélectionnée du paramètre évolutif lors de l'étape 160. Le graphe 200 est affiché dans une troisième zone d'affichage 360.

La troisième zone d'affichage 360 est par exemple disposée à côté de la première zone 315 et de la deuxième zone 325 d'affichage.

Les nœuds 210 et liens 220 affichés dans la troisième zone d'affichage 360 ont de préférence le même code visuel que les lignes 330 associées à ceux-ci dans la première zone 315 et la deuxième zone 325 d'affichage. Ce code visuel est notamment une couleur.

Ainsi, le procédé de visualisation permet d'observer le graphe élémentaire 200 correspondant à une valeur 345 particulière du paramètre évolutif dont dépend le graphe dynamique associé. L'utilisateur est par ailleurs libre de choisir la valeur 345 du paramètre évolutif pour laquelle il souhaite visualiser le graphe élémentaire 200 correspondant.

Par exemple, le graphe dynamique représenté sur la figure 3 comprend un ensemble 205 de quatre nœuds 210 et un ensemble 215 de six liens 220.

La ligne 350 a été placé sur l'axe évolutif à une valeur 345 du paramètre évolutif pour laquelle seuls les nœuds A, B et C sont présents dans le graphe dynamique. A ce même instant, les liens existants sont les liens A-B, B-D, et A-D.

Ainsi, dans la troisième zone d'affichage 360, il est représenté un graphe 200 correspondant à cette configuration.

De plus, grâce aux première zone 315 et deuxième zone 325 d'affichage, l'utilisateur peut avoir une vue d'ensemble précise de la présence des nœuds 210 et/ou des liens 220 ou non dans certaines gammes de valeurs du paramètre évolutif. Cette vue d'ensemble est encore facilitée par les fonctions de filtrage et de tri proposées par l'invention qui permettent à l'analyste de se concentrer seulement sur l'évolution d'une certaine partie des nœuds 210 et/ou des liens 220.

En reprenant la figure 3, l'utilisateur peut voir par exemple très rapidement que le nœud C n'existe plus à partir d'un certain moment dans le graphe dynamique, alors que le nœud D n'apparaît que plus tard. Il peut aussi remarquer avec la vue d'ensemble que les nœuds C et D n'interagissent jamais ensemble car il n'y a aucun lien C-D, pour aucune valeur du paramètre évolutif.

La troisième fenêtre d'affichage 360 offre une visualisation du graphe 200 aisée à l'analyste qui peut alors facilement se représenter les interactions entre les nœuds pour toute valeur du paramètre évolutif.

Ainsi, l'invention permet une analyse des graphes dynamiques plus simple et demandant moins d'effort à l'utilisateur. De plus, cette analyse reste simple quand le nombre de nœuds 210 augmente, grâce à la vue d'ensemble proposée par l'invention mais aussi aux fonctions de tri et de filtrage des nœuds 210 et/ou des liens 220.

## Revendications

1. Procédé de visualisation mis en œuvre par un équipement informatique d'un graphe dynamique, le graphe dynamique étant évolutif en fonction d'un paramètre évolutif et pour chaque valeur du paramètre évolutif présentant un graphe élémentaire (200) comprenant au moins un nœud (210) choisi dans un ensemble (205) de nœuds (210) et en cas d'une pluralité de nœuds (210), au moins un lien (220) raccordant ces nœuds (210), le procédé comprenant les étapes suivantes :
- détermination (120) d'un premier graphique (310), le premier graphique (310) définissant une valeur binaire pour chaque nœud (210) de l'ensemble (205) de nœuds (210) et pour chaque valeur du paramètre évolutif, ladite valeur binaire étant vrai lorsque le nœud (210) associé à cette valeur binaire est présent dans le graphe dynamique pour la valeur du paramètre évolutif associé à cette valeur binaire, et faux, dans le cas contraire ;
- détermination (130) d'un deuxième graphique (320), le deuxième graphique (320) définissant une valeur binaire pour chaque couple de nœuds (210) de l'ensemble (205) de nœuds et pour chaque valeur du paramètre évolutif, ladite valeur binaire étant vrai lorsqu'un lien (220) entre le couple de nœuds (210) associé à cette valeur binaire est présent dans le graphe dynamique pour la valeur du paramètre évolutif associé à cette valeur binaire, et faux, dans le cas contraire ;
- affichage (140) du premier graphique (310) dans une première zone (315) d'affichage et du deuxième graphique (320) dans une deuxième zone (325) d'affichage ;
- acquisition (160) d'une commande indiquant une valeur (345) sélectionnée du paramètre évolutif, ladite commande étant générée à la suite d'une interaction d'un utilisateur exercée sur la première zone (315) d'affichage et/ou la deuxième zone (325) d'affichage ;
- affichage (170) du graphe élémentaire (200) pour la valeur (345) sélectionnée du paramètre évolutif dans une troisième zone (360) d'affichage ;
le procédé comprenant en outre une étape d'affichage (155) dans la première zone (315) et/ou dans la deuxième zone (325) d'un axe évolutif (340) présentant l'ensemble ou au moins une partie des valeurs du paramètre évolutif, chacun du premier graphique (310) et du deuxième graphique (320) étant affiché en correspondance avec cet axe évolutif (340) ;
la première zone (315) d'affichage et la deuxième zone (325) d'affichage étant disposées l'une en regard de l'autre de sorte que les valeurs binaires correspondant à une même valeur du paramètre évolutif soient représentées sur une même ligne perpendiculaire à l'axe évolutif (340).

2. Procédé selon l'une quelconque des revendications précédentes, dans lequel le paramètre évolutif est le temps.

3. Procédé selon la revendication 1 ou 2, dans lequel ladite interaction de l'utilisateur comprend la sélection d'une valeur (345) du paramètre évolutif en relation avec l'axe évolutif (340).

4. Procédé selon la revendication 3, comprenant en outre, à la suite de ladite interaction de l'utilisateur, une étape d'affichage (155) d'une ligne perpendiculaire (350) à l'axe évolutif (340) et interceptant cet axe évolutif (340) dans le point correspondant à la valeur (345) du paramètre évolutif sélectionné, de préférence ladite ligne (350) s'étendant sensiblement à travers la première (315) et la deuxième zone (325) d'affichage.

5. Procédé selon l'une quelconque des revendications précédentes, dans lequel chacun du premier (310) et du deuxième (320) graphiques comporte des lignes (330) de représentation des valeurs binaires associées respectivement aux nœuds (210) et aux liens (220) entre ces nœuds (210), ces lignes (330) de représentation étant continues sur des segments sur lesquels les valeurs binaires correspondantes restent vrai.

6. Procédé selon la revendication 5, dans lequel chaque ligne (330) de représentation présente une discontinuité sur des segments sur lesquels les valeurs binaires correspondantes restent faux.

7. Procédé selon l'une quelconque des revendications 5 et 6, dans lequel les lignes (330) de représentation des valeurs binaires associées aux nœuds (210) et aux liens (220) présentent un code visuel en fonction d'attributs associés respectivement à ces nœuds (210) et à ces liens (220).

8. Procédé selon l'une quelconque des revendications précédentes, comportant en outre une étape de filtrage (145) des nœuds (210) et/ou des liens (220) suite à une sélection par l'utilisateur d'au moins un critère d'affichage prédéterminé, l'étape d'affichage du premier graphique (310) et du deuxième graphique (320) comprend alors l'affichage des zones de ces graphiques satisfaisant à ce ou à ces critères.

9. Procédé selon la revendication 8, dans lequel le ou chaque critère est défini sur la base d'une valeur particulière ou d'un ensemble de valeurs particulières d'un ou de plusieurs attributs des nœuds (210) et/ou des liens (220).

10. Procédé selon l'une quelconque des revendications précédentes, comportant en outre une étape de tri des nœuds (210) et/ou des liens (220) suite à une sélection par l'utilisateur d'un critère de tri, l'étape d'affichage (140) du premier graphique (310) et du deuxième graphique (320) comprend alors l'affichage des représentations des valeurs binaires correspondante selon l'ordre déterminé par ce critère de tri.

11. Produit programme d'ordinateur comportant des instructions logicielles qui, lorsque mises en œuvre par un équipement informatique, mettent en œuvre le procédé selon l'une quelconque des revendications précédentes.

12. Système de visualisation (10) d'un graphe dynamique, comprenant des moyens techniques adaptés pour mettre en œuvre le procédé selon l'une quelconque des revendications 1 à 10.

## Patentansprüche

1. Visualisierungsverfahren, implementiert von einer Computerausrüstung eines dynamischen Graphen, wobei der dynamische Graph
abhängig von einem sich ändernden Parameter skalierbar ist und für jeden Wert des sich ändernden Parameters einen Elementargraphen (200) aufweist, der mindestens einen Knoten (210), der aus einer Menge (205) von Knoten (210) ausgewählt ist, und im Fall einer Vielzahl von Knoten (210) mindestens eine Verbindung (220) umfasst, die diese Knoten (210) verbindet, das Verfahren umfassend die folgenden Schritte:
- Bestimmen (120) eines ersten Graphen (310), wobei der erste Graph (310) einen Binärwert für jeden Knoten (210) des Satzes (205) von Knoten (210) und für jeden Wert des sich ändernden Parameters definiert, wobei der Binärwert wahr ist, wenn der Knoten (210), der mit diesem Binärwert assoziiert ist, in dem dynamischen Graphen für den Wert des sich ändernden Parameters, der mit diesem Binärwert assoziiert ist, vorhanden ist, und falsch, wenn dies nicht der Fall ist;
- Bestimmen (130) eines zweiten Graphen (320), wobei der zweite Graph (320) einen Binärwert für jedes Knotenpaar (210) des Satzes (205) von Knoten und für jeden Wert des sich ändernden Parameters definiert, wobei der Binärwert wahr ist, wenn eine Verbindung (220) zwischen dem Knotenpaar (210), das mit diesem Binärwert assoziiert ist, in dem dynamischen Graphen für den Wert des sich ändernden Parameters, der mit diesem Binärwert assoziiert ist, vorhanden ist, und falsch, wenn dies nicht der Fall ist;
- Anzeigen (140) der ersten Grafik (310) in einem ersten Anzeigebereich (315) und der zweiten Grafik (320) in einem zweiten Anzeigebereich (325);
- Erfassen (160) eines Befehls, der einen ausgewählten Wert (345) des sich ändernden Parameters angibt, wobei der Befehl als Resultat einer Benutzerinteraktion erzeugt wird, die auf den ersten Anzeigebereich (315) und/oder den zweiten Anzeigebereich (325) ausgeübt wird;
- Anzeigen (170) des Elementargraphen (200) für den ausgewählten Wert (345) des sich ändernden Parameters in einem dritten Anzeigebereich (360);
wobei das Verfahren ferner einen Schritt eines Anzeigens (155) in dem ersten Bereich (315) und/oder in dem zweiten Bereich (325) einer sich entwickelnden Achse (340) umfasst, die alle oder zumindest einen Teil der Werte des sich entwickelnden Parameters darstellt, wobei jede von der ersten Grafik (310) und der zweiten Grafik (320) in Übereinstimmung mit dieser sich entwickelnden Achse (340) angezeigt wird;
wobei der erste Anzeigebereich (315) und der zweite Anzeigebereich (325) einander gegenüberliegend angeordnet sind, sodass die binären Werte, die einem gleichen Wert des sich entwickelnden Parameters entsprechen, auf einer gleichen Linie senkrecht zu der sich entwickelnden Achse (340) dargestellt werden.

2. Verfahren nach einem der vorherigen Ansprüche, wobei der sich entwickelnde Parameter die Zeit ist.

3. Verfahren nach Anspruch 1 oder 2, wobei die Benutzerinteraktion die Auswahl eines Werts (345) des sich entwickelnden Parameters in Bezug auf die sich entwickelnde Achse (340) umfasst.

4. Verfahren nach Anspruch 3, ferner umfassend im Anschluss an die Benutzerinteraktion einen Schritt eines Anzeigens (155) einer Linie (350) umfasst, die senkrecht zur sich entwickelnden Achse (340) verläuft und diese sich entwickelnde Achse (340) in dem Punkt schneidet, der dem Wert (345) des ausgewählten sich entwickelnden Parameters entspricht, wobei sich die Linie (350) vorzugsweise im Wesentlichen durch den ersten (315) und den zweiten (325) Anzeigebereich erstreckt.

5. Verfahren nach einem der vorherigen Ansprüche, wobei jeder von dem ersten (310) und dem zweiten (320) Graphen Linien (330) zur Darstellung der binären Werte umfasst, die jeweils mit den Knoten (210) und den Verbindungen (220) zwischen diesen Knoten (210) verbunden sind, wobei diese Darstellungslinien (330) über Segmente, auf denen die entsprechenden binären Werte wahr bleiben, kontinuierlich sind.

6. Verfahren nach Anspruch 5, wobei jede Darstellungslinie (330) eine Diskontinuität über Segmente aufweist, auf denen die entsprechenden Binärwerte falsch bleiben.

7. Verfahren nach einem der Ansprüche 5 und 6, bei dem die Linien (330) zur Darstellung der binären Werte, die mit den Knoten (210) und den Links (220) assoziiert sind, einen visuellen Code abhängig von Attributen aufweisen, die mit diesen Knoten (210) bzw. diesen Links (220) assoziiert sind.

8. Verfahren nach einem der vorherigen Ansprüche, ferner umfassend einen Schritt eines Filterns (145) der Knoten (210) und/oder Verbindungen (220) infolge einer Auswahl mindestens eines vorbestimmten Anzeigekriteriums durch den Benutzer, wobei der Schritt eines Anzeigens der ersten Grafik (310) und der zweiten Grafik (320) dann das Anzeigen der Bereiche dieser Grafiken umfasst, die dieses Kriterium oder diese Kriterien erfüllen.

9. Verfahren nach Anspruch 8, wobei das oder jedes Kriterium basierend auf einem bestimmten Wert oder einem Satz bestimmter Werte eines oder mehrerer Attribute der Knoten (210) und/oder Links (220) definiert wird.

10. Verfahren nach einem der vorherigen Ansprüche, ferner umfassend einen Schritt eines Sortierens von Knoten (210) und/oder Verbindungen (220) nach einer Auswahl eines Sortierkriteriums durch den Benutzer, wobei der Schritt eines Anzeigens (140) der ersten Grafik (310) und der zweiten Grafik (320) dann ein Anzeigen der Darstellungen der entsprechenden Binärwerte gemäß der durch dieses Sortierkriterium bestimmten Reihenfolge umfasst.

11. Computerprogrammprodukt, umfassend Softwareanweisungen, die, wenn sie von einer Rechenvorrichtung implementiert werden, das Verfahren nach einem der vorherigen Ansprüche implementieren.

12. Visualisierungssystem (10) eines dynamischen Graphen, umfassend technische Einrichtungen, die angepasst sind, um das Verfahren nach einem der Ansprüche 1 bis 10 durchzuführen.

## Claims

1. A method for display implemented by computer equipment of a dynamic graph, the dynamic graph being
evolving following an evolving parameter and for each value of the evolving parameter presenting an elementary graph (200) comprising at least one node (210) chosen from a set (205) of nodes (210) and, in the case of a plurality of nodes (210), at least one link (220) connecting these nodes (210), the method comprising the following steps:
- determination (120) of a first graph (310), the first graph (310) defining a binary value for each node (210) of the set (205) of nodes (210) and for each value of the evolutionary parameter, said binary value being true when the node (210) associated with this binary value is present in the dynamic graph for the value of the evolutionary parameter associated with this binary value, and false, otherwise;
- determination (130) of a second graph (320), the second graph (320) defining a binary value for each pair of nodes (210) of the set (205) of nodes and for each value of the evolving parameter, said binary value being true when a link (220) between the pair of nodes (210) associated with this binary value is present in the dynamic graph for the value of the evolutionary parameter associated with this binary value, and false otherwise;
- display (140) of the first graphic (310) in a first display area (315) and of the second graphic (320) in a second display area (325);
- acquisition (160) of a command indicating a selected value (345) of the changing parameter, said command being generated following a user interaction exerted on the first display zone (315) and/or the second display zone (325);
- display (170) of the elementary graph (200) for the selected value (345) of the changing parameter in a third display zone (360);
the method further comprising a step of displaying (155) in the first zone (315) and/or in the second zone (325) an evolving axis (340) showing all or at least some of the values of the evolving parameter, each of the first graph (310) and the second graph (320) being displayed in correspondence with this evolving axis (340);
the first display zone (315) and the second display zone (325) being arranged opposite each other so that the binary values corresponding to the same value of the changing parameter are represented on the same line perpendicular to the changing axis (340).

2. A method according to any one of the preceding claims, wherein the evolving parameter is time.

3. A method according to claim 1 or 2, wherein said user interaction comprises selecting a value (345) of the evolutionary parameter in relation to the evolutionary axis (340).

4. A method according to claim 3, further comprising, following said user interaction, a step of displaying (155) a line perpendicular (350) to the evolving axis (340) and intercepting this evolving axis (340) in the point corresponding to the value (345) of the selected evolving parameter, preferably said line (350) extending substantially through the first (315) and second (325) display areas.

5. A method according to any one of the preceding claims, in which each of the first (310) and second (320) graphs comprises lines (330) representing the binary values associated respectively with the nodes (210) and with the links (220) between these nodes (210), these representation lines (330) being continuous over segments on which the corresponding binary values remain true.

6. A method according to claim 5, in which each line (330) of representation has a discontinuity on segments on which the corresponding binary values remain false.

7. A method according to any one of claims 5 and 6, in which the lines (330) representing the binary values associated with the nodes (210) and links (220) present a visual code as a function of attributes associated respectively with these nodes (210) and these links (220).

8. A method according to any one of the preceding claims, further comprising a step (145) of filtering the nodes (210) and/or links (220) following a selection by the user of at least one predetermined display criterion, the step of displaying the first graph (310) and the second graph (320) then comprising the display of the areas of these graphs satisfying this or these criteria.

9. A method according to claim 8, wherein the or each criterion is defined on the basis of a particular value or set of particular values of one or more attributes of the nodes (210) and/or links (220).

10. A method according to any one of the preceding claims, further comprising a step of sorting the nodes (210) and/or links (220) following a selection by the user of a sorting criterion, the display stage (140) of the first graph (310) and of the second graph (320) then comprising the display of the representations of the corresponding binary values according to the order determined by this sorting criterion.

11. A computer program product comprising software instructions, which, when carried out by a computing device, implement the method according to any one of the preceding claims.

12. A display system (10) for a dynamic graph, comprising technical means adapted to implement the method according to any one of claims 1 to 10.
